# FASCICULE DE BREVET EUROPEEN

(11) **EP 3 987 202 B1**
(45) Date de publication et mention de la délivrance du brevet: **09.10.2024**
(21) Numéro de dépôt: 20733640.5
(22) Date de dépôt: 23.06.2020
(51) Int. Cl.: F16K 1/08, F16K 3/24, F16K 27/02

(54) **ROBINET A SOUPAPE**
ABSPERRVENTIL
GLOBE VALVE

(30) Priorité: 24.06.2019 FR 1906817
(43) Date de publication de la demande: 27.04.2022
(73) Titulaire: Electricité de France, 75008 Paris (FR)
(72) Inventeur: FERRARI, Jérôme, 77590 BOIS LE ROI (FR)
(74) Mandataire: Regimbeau
(86) Numéro de dépôt international: PCT/EP2020/067472
(87) Numéro de publication internationale: WO 2020/260264

(56) Documents cités:
- WO-A1-2012/168939
- CH-A- 197 056
- FI-A- 20 049
- US-A- 2 685 426
- US-A- 3 648 718
- US-A1- 2007 227 600

## Description

### DOMAINE DE L'INVENTION

La présente invention se situe dans le domaine de la robinetterie et a plus particulièrement trait à un robinet à soupape.

Elle trouve une application notamment dans les domaines industriels de la production d'électricité (d'origine nucléaire, fossile, etc.), de la chimie, du pétrole, etc.

### ARRIERE PLAN TECHNOLOGIQUE DE L'INVENTION

Les robinets à soupape sont très utilisés dans l'industrie en raison de leur robustesse. Mais, en l'état actuel de la technique, l'utilisation de ces robinets engendre d'importantes pertes de charges. Cela, en conséquence, au regard du débit qui doit être passé dans les lignes de distribution, oblige à surdimensionner les robinets, les actionneurs, voire les lignes elles-mêmes. Cela augmente les coûts et réduit la résistance aux séismes.

Au sein de tels robinets, la soupape (ou clapet, encore appelé obturateur) se déplace perpendiculairement à la veine fluide et perpendiculairement à son siège d'étanchéité. L'obturateur peut être en position fermée, en position ouverture totale, ou dans n'importe quelle position intermédiaire.

Ces robinets présentent un sens de montage et leur fermeture s'effectue en général à contre-courant du sens de circulation du fluide. A l'ouverture, la pression du fluide facilite alors la manoeuvre.

Pour les petits diamètres, le clapet prend souvent la forme d'un pointeau. Pour des réglages précis, il ressemble parfois à une aiguille.

Mais ces robinets à soupape, dont le corps est moulé ou forgé, ont pour caractéristique de présenter des veines de circulation de fluide (en abrégé "veine fluide") de forme torturée, avec des virages et des contractions au passage entre l'obturateur et le siège qui engendrent de fortes pertes de charge.

Ils sont très utilisés dans l'industrie pour leur « robustesse ». Ils s'ouvrent avec une faible course de la tige, ce qui permet l'utilisation d'un soufflet (en anglais "bellow") qui assure l'étanchéité entre le fluide et l'extérieur. Leur actionnement induit peu de frottement sur leurs portées d'étanchéité. Ils ont des profils très élancés qui offre une certaine sensibilité au séisme, qui est aggravée en cas d'utilisation d'un actionneur qui ajoutera une masse importante en haut de l'édifice.

Pour des débits plus importants nécessitant de plus grand diamètres nominaux, d'autres technologies de robinets sont préférées, telles que, par exemple, des robinets à tournant sphérique ou des robinets vanne. Une des raisons de ce choix est que les robinets à soupape de plus grande dimension (> DN 80) sont sensibles au séisme.

Les robinets à tournant sphérique sont constitués d'un corps et d'un obturateur appelé "tournant" qui se déplace selon un mouvement de rotation perpendiculaire à la direction de circulation du fluide.

Quant aux robinets vanne, ils comportent un obturateur qui se déplace perpendiculairement à la veine fluide et parallèlement aux sièges d'étanchéité.

Lorsque les industriels ont besoin de limiter les pertes de charges, ils ont habituellement recours à de tels dispositifs.

Mais ces robinets présentent leurs propres inconvénients. Par exemple, les robinets à tournant sphérique ou cylindriques sont sensibles aux particules présentes dans le fluide, qui peuvent rayer les portées d'étanchéité, tandis que les robinets vanne engendrent d'importants frottements entre les portées d'étanchéité de l'obturateur et le siège de cet obturateur.

Il est aussi possible de réduire les pertes de charges tout en conservant une technologie proche de celle du robinet à soupape classique. Ainsi, il est parfois proposé de placer un robinet à soupape au niveau d'un coude de circulation de la veine fluide, ce qui réduit déjà significativement les pertes de charges.

Il existe également une technologie de robinet à soupape en "Y" dont l'objectif est spécifiquement de réduire les pertes de charge. Cette technologie est très peu utilisée dans les centrales nucléaires françaises, peut- être pour des raisons de difficultés de conception.

De plus, l'ensemble des solutions énumérées ci-dessus consistent en un remplacement de l'ensemble du robinet.

Un autre art antérieur connu du déposant est constitué par les documents suivants : FI 20049, CH 197 056, US 3 648 718, US 2007/227600, WO2012/168939 et US2 685 426.

La présente invention vise à réduire les pertes de charge des robinets à soupape, ceci à taille de robinet constante.

### RESUME DE L'INVENTION

Ainsi, la présente invention se rapporte à un robinet à soupape, qui comporte un corps traversé par un canal de circulation de fluide, lequel délimite une veine fluide avec une entrée et une sortie, ainsi qu'un obturateur logé à l'intérieur d'une branche généralement perpendiculaire audit corps, cet obturateur étant mobile entre une première position extrême dans laquelle il obture ledit canal et une seconde position extrême dans laquelle il n'obture pas le canal, le robinet présentant un siège de forme annulaire dont l'ouverture centrale est destinée à être traversée par ladite veine fluide, caractérisé par le fait que ledit canal présente, de part et d'autre de la région d'action dudit obturateur, c'est-à-dire la zone dudit canal qui interfère avec ladite branche, une section de circulation de liquide généralement circulaire, laquelle se raccorde de manière continue, au moins dans la région d'action dudit obturateur, à une section plus longue que large, c'est-à-dire aplatie, ledit corps étant dépourvu d'élément formant saillie vers l'intérieur dudit canal, et ledit obturateur présentant une extrémité libre en forme de bec, c'est à dire globalement biseautée, et étant partiellement engagé dans le siège de manière à assurer la continuité de la paroi du canal en position de circulation du fluide.

Quand on indique « le corps étant dépourvu d'élément formant saillie vers l'intérieur dudit canal », on entend, selon la présente invention, que cela s'entend lorsque l'obturateur est logé à l'intérieur dudit corps. Exprimé autrement, cette expression s'entend lorsque le liquide circule dans le robinet, c'est-à-dire lorsque ce dernier est équipé d'un obturateur avec son siège et sa cage.

Grâce à l'invention, on parvient à une réduction des pertes de charge notable, en apportant à minima des modifications au corps du robinet seulement, c'est à dire sans devoir modifier systématiquement les autres pièces qui le composent (tige et obturateur notamment).

Selon d'autres caractéristiques non limitatives et avantageuses de l'invention :
- ledit canal présente une pente ascendante dans la région d'action dudit obturateur ;
- ledit canal présente une première inflexion en amont de la zone de pente ascendante et une deuxième inflexion en aval de la zone de pente ascendante, les termes "amont" et "aval" étant considérés en tenant compte du sens d'écoulement d'un fluide ;
- il comporte une cage de guidage dudit obturateur et de tenue de son siège et cette cage présente une forme annulaire, dont la paroi présente un passage de circulation de la veine fluide qui a une forme et une orientation analogues à celles de ladite section plus longue que large ;
- ledit siège et ladite cage sont amovibles ;
- ledit siège et ladite cage sont inamovibles.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
La figure 1 est une vue en coupe longitudinale d'un robinet à soupape conforme à l'état de la technique, vue sur laquelle on a représenté en traits mixte la forme théorique d'une veine fluide idéale, c'est à dire occasionnant peu de perte de charge ;
La figure 2 est une vue en coupe longitudinale d'un corps de robinet conforme à la présente invention ;
La figure 3 est une vue analogue à la figure 2, la direction d'observation étant différente ;
La figure 4 est encore une vue analogue à la figure 3, selon une direction différente des deux précédentes ;
La figure 5 est une représentation tridimensionnelle, issue d'un logiciel de modélisation, de la veine fluide obtenue à l'aide d'un robinet selon la présente invention ;
La figure 6 est aussi une représentation de la veine fluide, sur laquelle figurent également un siège et une cage qui équipent le robinet ;
La figure 7 est une vue en perspective du siège précité ;
La figure 8 est une vue en perspective de la cage précitée ;
La figure 9 est une vue en coupe longitudinale d'un corps de robinet selon l'invention, sur laquelle figure également et partiellement son obturateur, lequel est en position ouverte, c'est à dire permettant l'écoulement de fluide ;
La figure 10 est une vue analogue à la figure 9, l'obturateur étant représenté en position fermée, c'est à dire s'opposant à l'écoulement de fluide.

### DESCRIPTION DETAILLEE DE L'INVENTION

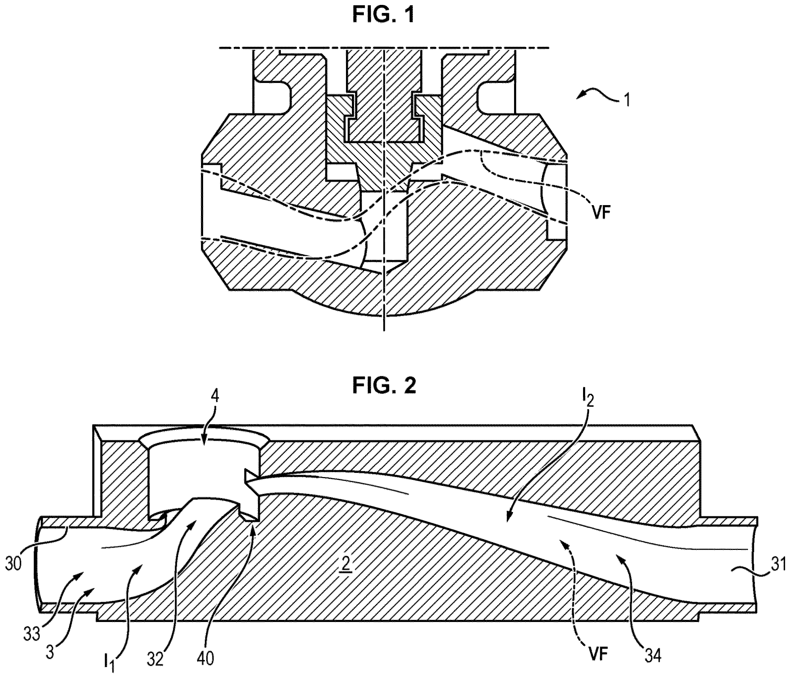

A la figure 1 annexée, on reconnaît la structure générale d'un robinet 1 à soupape conforme à l'état de la technique. On y a représenté également, en surimpression et délimitée par des traits mixtes, la veine fluide VF idéale que l'on souhaite obtenir grâce au robinet selon l'invention.

Par l'expression "veine fluide", on entend dans l'ensemble de la présente description, le volume délimité par le fluide qui est appelé à circuler à travers le robinet.

A la figure 2 est représenté au moins en partie le corps 2 d'un robinet 1 selon l'invention.

Ce corps est traversé par un canal 3 de circulation de fluide qui délimite la veine fluide VF précitée. L'entrée et la sortie de ce canal sont référencées respectivement 30 et 31.

Le corps 2 comporte également un second canal cylindrique 4, que l'on désigne ci-après "branche" 4 et qui s'étend selon une direction généralement perpendiculaire au canal 3.

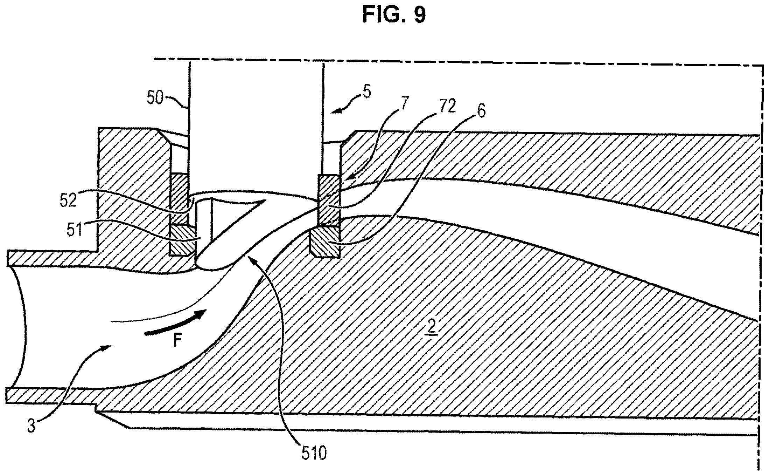

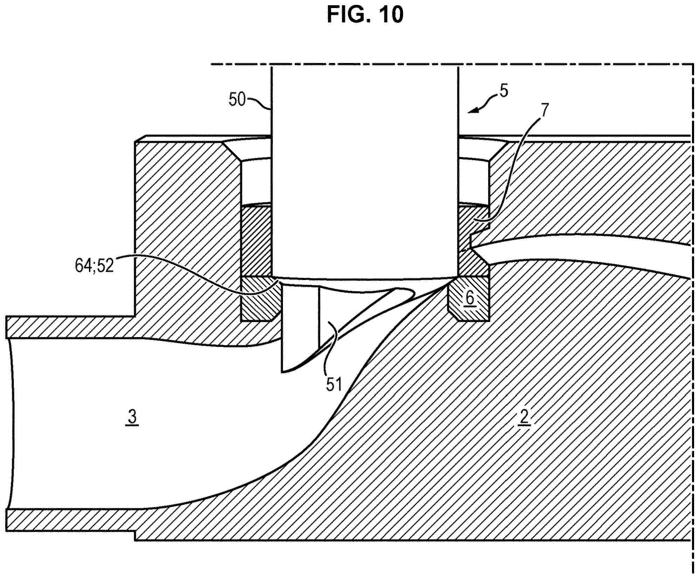

La branche 4 est destinée à recevoir l'obturateur du robinet, ainsi qu'on peut le voir sur les figures 9 et 10.

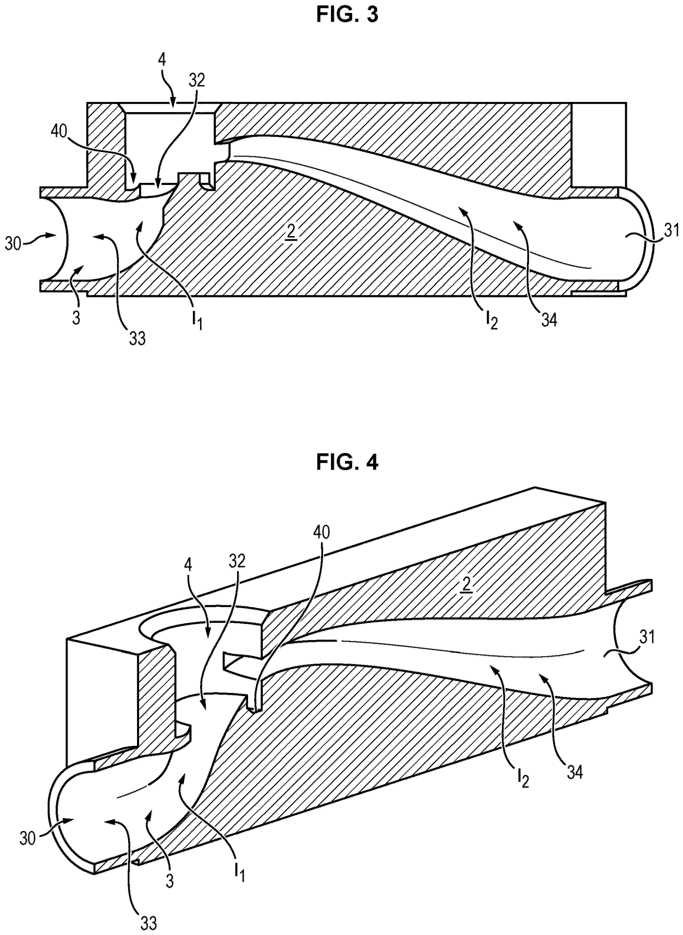

Ainsi que cela est bien visible aux figures 2 à 4, la branche 4 s'étend jusqu'à interférer avec le canal 3 et présente un fond annulaire 40 qui ceinture, c'est à dire entoure la région correspondante du canal 3.

Le présent demandeur a observé que ce canal 3, pour autant qu'il présente, de part et d'autre de la région d'action de l'obturateur une section de circulation de liquide généralement circulaire, qui se raccorde progressivement, au moins dans la région d'action dudit obturateur, à une section plus longue que large, c'est à dire "aplatie" (par exemple oblongue ou elliptique), la plus grande dimension de cette section s'étendant sensiblement perpendiculairement à l'axe du canal 4, et que le corps 2 soit dépourvu d'élément formant saillie vers l'intérieur du canal 3, alors les pertes de charge d'un tel robinet sont diminuées de manière drastique.

Bien entendu, au sens de la présente demande, on entend par l'expression "région d'action de l'obturateur", la zone 32 du canal 3 qui interfère avec la branche 4.

Sur les figures 2 à 4 sont référencées 33 et 34 les zones du canal 3 dans lesquelles ce dernier présente une section globalement circulaire.

Le canal 3 présente une pente ascendante dans la région d'action dudit obturateur, c'est à dire dans la zone 32. Elles le sont également du fait que le canal présente une première inflexion en amont de la zone 32 de pente ascendante et une deuxième inflexion en aval de la zone 32 de pente descendante, les termes "amont" et "aval" étant considérés en tenant compte du sens d'écoulement d'un fluide.

Exprimé autrement, le robinet selon l'invention est particulièrement optimisé en termes de pertes de charge, dès lors que la veine fluide VF bénéficie :
- D'un passage incliné à l'aplomb de l'obturateur ;
- De virages permettant d'amener le fluide de l'entrée à ce passage en l'inclinant correctement;
- De virages permettant d'amener le fluide du passage incliné vers la sortie orientée de manière globalement horizontale ;
- D'une contraction visant à déformer la veine fluide d'une forme circulaire à l'entrée à la forme du passage ;
- D'une expansion visant à reformer la forme circulaire de la sortie circulaire et globalement horizontale.

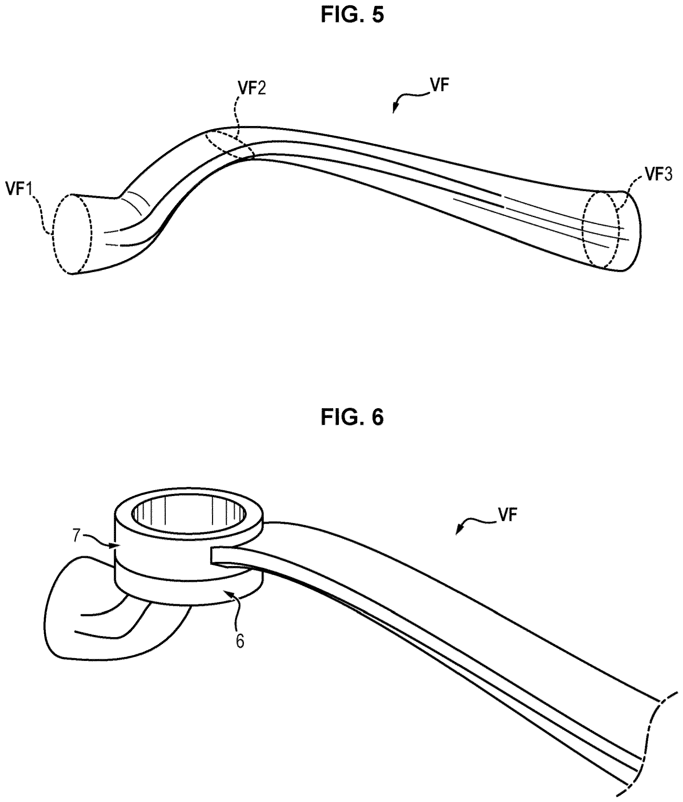

A la figure 5 est représentée, issue d'un logiciel de modélisation, la veine fluide VF obtenue à l'aide du robinet selon la présente invention. Les références VF1 et VF3 identifient les sections circulaires de la veine, tandis que la référence VF2 identifie la section "aplatie" de la veine.

En se reportant désormais aux figures 6 et suivantes, on revient plus en détail sur la structure du robinet selon l'invention.

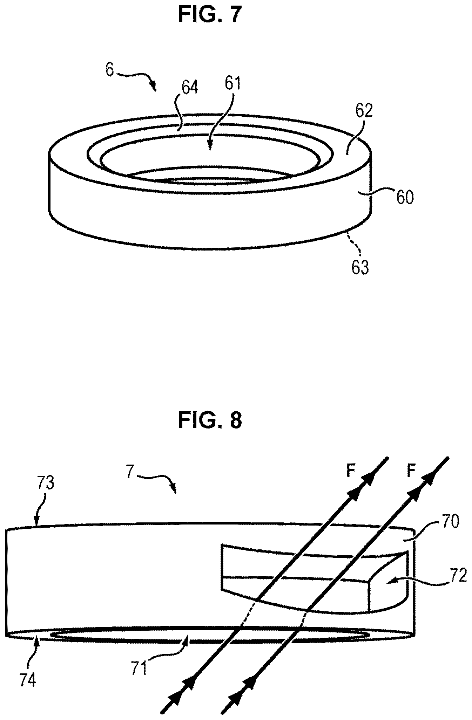

Comme montré particulièrement aux figures 7 et 9, le corps 2 de robinet est équipé d'un siège 6 en forme d'anneau. A titre d'exemple, un tel siège est réalisé en une matière telle que de l'acier inoxydable. Ce siège est dimensionné de telle manière qu'il puisse être positionné dans le fond annulaire précité 40 de la branche 4, tout en garantissant une parfaite étanchéité.

Les faces opposées 62 et 63 du corps 60 de ce siège sont planes et parallèles. Toutefois, en ce qui concerne la face supérieure 62, on constate qu'elle se prolonge en direction de l'ouverture centrale 61, par un flanc périphérique biseauté 64 formant portée d'étanchéité (comme on le verra plus loin). Bien entendu, d'autres formes peuvent être envisagées.

Ce siège 6 est avantageusement amovible, mais on peut également concevoir qu'il soit fixé à demeure au corps 2.

Au-dessus du siège 6 s'élève une cage 7 qui, comme ce dernier, présente une forme annulaire. Son diamètre externe est strictement identique à celui du siège 6 et ses faces supérieure et inférieure 73 et 74 sont planes et parallèles. Son diamètre interne est, quant à lui, dimensionné de telle manière qu'il coïncide (c'est-à-dire est aligné) avec la naissance du flanc biseauté 64 du siège 6. Dans une forme de réalisation non représentée, les diamètres externes précités ne sont pas identiques.

Ainsi que cela est particulièrement visible à la figure 8, sa paroi présente un passage (lumière) débouchant 72 qui présente une forme analogue, et si possible identique à celle de la forme "aplatie" du canal 3 et de la veine fluide VF. Ce passage 72 fait donc communiquer son ouverture centrale 71 avec l'extérieur. On en comprendra plus loin l'intérêt de cette structure.

A nouveau en référence à la figure 9, on note la présence du corps 50 de l'obturateur 5 du robinet. Cet obturateur n'a pas été représenté en totalité. En effet, pour une meilleure lecture de la figure, on s'est contenté de représenter sa partie inférieure qui coopère avec le canal 3.

Ce corps 50, de forme cylindrique, présente un diamètre identique, au jeu près, au diamètre interne de la cage 70.

Le corps 50 se prolonge par un bec 51 qui s'inscrit dans un cylindre de diamètre inférieur à celui du corps 50. L'épaulement annulaire 52 qui les sépare est également biseauté et constitue une seconde portée d'étanchéité, comme on l'expliquera plus loin.

Enfin, l'extrémité libre 510 du bec 51 est biseautée et est conformée de manière à épouser, autant que possible, la courbure du canal 3 dans cette région du robinet 1.

A la figure 9, l'obturateur 5 est représenté dans une position qui autorise le passage de fluide dans le canal 3. Le bec 51 est partiellement engagé dans le siège 6. Ainsi, le fluide F (voir flèches sur les figures 8 et 9) qui s'écoule à travers le robinet "glisse" sans être perturbé dans son flux le long de l'extrémité 510 du bec 51, traverse l'ouverture centrale 61 du siège puis celle 71 de la cage 7, pour enfin s'échapper à travers le passage 72. A nouveau, il n'est pas perturbé dans son flux, du fait que le passage 72 a une forme analogue et de préférence identique, à la section du canal 3 dans cette région.

Ceci est illustré symboliquement par le schéma de la figure 6.

Quand on ferme le robinet, ce qui correspond à la situation de la figure 10, l'obturateur 5 est déplacé vers le bas, jusqu'à ce que les portées d'étanchéité 52 du corps 50 et 64 du siège 6 soient en contact. Dans une telle position, le passage 61 du siège 6 est fermé, de sorte que le passage de fluide est impossible.

Dans une autre version du présent robinet pour laquelle une protection n'est pas revendiquée, on peut faire usage d'un obturateur 5 dépourvu de bec 51.

Pour limiter l'encombrement, il est possible de raccourcir de façon abrupte la partie diffuseur d'un tel robinet.

Toutes les industries utilisant des robinets peuvent être intéressées par celui de l'invention (nucléaire, pétrole, chimie, etc.).

L'invention réduit la taille de robinet nécessaire, ce qui réduit tous les coûts associés : actionneurs, conduites, supportage, espace nécessaire, maintenance, etc. Dans plus, du fait de sa taille réduite, un tel robinet conserve plus facilement son opérabilité, même après qu'un séisme soit survenu.

La réduction des pertes de charge proposée ici se fait en réduisant au maximum les perturbations faites sur l'écoulement.

En tout état de cause, selon la présente invention, du fait de la forte baisse des pertes de charge, le débit initial du robinet est maintenu, malgré la section de passage plus petite.

De tels robinets peuvent donc être de plus petite taille, pour un même débit nominal.

## Revendications

1. Robinet (1) à soupape, qui comporte un corps (2) traversé par un canal (3) de circulation de fluide, lequel délimite une veine fluide (VF) avec une entrée et une sortie, ainsi qu'un obturateur (5) logé à l'intérieur d'une branche (4) généralement perpendiculaire audit corps, cet obturateur (5) étant mobile entre une première position extrême dans laquelle il obture ledit canal (3) et une seconde position extrême dans laquelle il n'obture pas le canal (3), le robinet présentant un siège (6) de forme annulaire dont l'ouverture centrale (61) est destinée à être traversée par ladite veine fluide (VF), **caractérisé par le fait que** ledit canal (3) présente, de part et d'autre de la région d'action (32) dudit obturateur (5), c'est-à-dire la zone dudit canal (3) qui interfère avec ladite branche (4), une section de circulation de liquide généralement circulaire, laquelle se raccorde de manière continue, au moins dans ladite région d'action (32) dudit obturateur (5), à une section plus longue que large, c'est à dire aplatie, ledit corps (2) étant dépourvu d'élément formant saillie vers l'intérieur dudit canal (3), et ledit obturateur (5) présentant une extrémité libre en forme de bec (51), c'est à dire globalement biseautée, et étant partiellement engagé dans le siège (6) de manière à assurer la continuité de la paroi du canal (3) en position de circulation du fluide.

2. Robinet (1) selon la revendication 1, **caractérisé par le fait que** ledit canal (3) présente une pente ascendante dans la région d'action (32) dudit obturateur (5).

3. Robinet (1) selon la revendication 2, **caractérisé par le fait que** ledit canal (3) présente une première inflexion (11) en amont de la zone de pente ascendante et une deuxième inflexion (12) en aval de la zone de pente ascendante, les termes "amont" et "aval" étant considérés en tenant compte du sens d'écoulement d'un fluide.

4. Robinet (1) selon l'une des revendications 1 à 3, **caractérisé par le fait qu'**il comporte une cage (7) de guidage dudit obturateur (5) et de tenue de son siège (6) et en ce que cette cage (7) présente une forme annulaire, dont la paroi présente un passage (72) de circulation de la veine fluide (VP) qui a une forme et une orientation analogues à celles de ladite section plus longue que large, c'est à dire aplatie.

5. Robinet (1) selon l'une des revendications 1 à 4, **caractérisé par le fait que** ledit siège (6) et ladite cage (7) sont amovibles.

6. Robinet (1) selon l'une des revendications 1 à 4, **caractérisé par le fait que** ledit siège (6) et ladite cage (7) sont inamovibles.

## Patentansprüche

1. Absperrventil (1), das einen Körper (2), der von einem Fluidzirkulationskanal (3) durchquert wird, der eine Fluidader (VF) mit einem Einlass und einem Auslass begrenzt, sowie einen Verschluss (5) aufweist, der im Inneren einer im Allgemeinen senkrecht zum Körper verlaufenden Abzweigung (4) untergebracht ist, wobei dieser Verschluss (5) zwischen einer ersten Extremposition, in der er den Kanal (3) verschließt, und einer zweiten Extremposition, in der er den Kanal (3) nicht verschließt, beweglich ist, wobei das Absperrventil einen ringförmigen Sitz (6) aufweist, dessen zentrale Öffnung (61) bestimmt ist, von der Fluidader (VF) durchquert zu werden, **dadurch gekennzeichnet, dass** der Kanal (3) auf beiden Seiten des Wirkungsbereichs (32) des Verschlusses (5), das heißt, der Zone des Kanals (3), die mit der Abzweigung (4) interferiert, einen im Allgemeinen kreisförmigen Flüssigkeitszirkulationsabschnitt aufweist, der sich zumindest im Wirkungsbereich (32) des Verschlusses (5) kontinuierlich an einen Abschnitt anschließt, der länger als breit, das heißt abgeflacht ist, wobei der Körper (2) kein Element aufweist, das in das Innere des Kanals (3) vorspringt, und der Verschluss (5) ein freies Ende in Form eines Schnabels (51) aufweist das heißt allgemein abgeschrägt, und dabei teilweise in den Sitz (6) derart eingreift, dass die Kontinuität der Wand des Kanals (3) in Zirkulationsposition des Fluids gesichert ist.

2. Absperrventil (1) nach Anspruch 1, **dadurch gekennzeichnet, dass** der Kanal (3) im Wirkungsbereich (32) des Verschlusses (5) eine ansteigende Neigung aufweist.

3. Absperrventil (1) nach Anspruch 2, **dadurch gekennzeichnet, dass** der Kanal (3) einen ersten Knick (I1), der dem Bereich mit ansteigender Neigung vorgelagert ist, und einen zweiten Knick (I2), der dem Bereich mit ansteigender Neigung nachgelagert ist, aufweist, wobei die Begriffe "vorgelagert" und "nachgelagert" unter Berücksichtigung der Strömungsrichtung eines Fluids betrachtet werden.

4. Absperrventil (1) nach einem der Ansprüche 1 bis 3, **dadurch gekennzeichnet, dass** es einen Käfig (7) zur Führung des Verschlusses (5) und zum Halten seines Sitzes (6) aufweist und dass dieser Käfig (7) eine ringförmige Form aufweist, dessen Wand einen Zirkulationsdurchgang (72) der Fluidader (VP) aufweist, der eine Form und eine Ausrichtung analog zu denen des längeren als breiten Abschnitts hat, das heißt abgeflacht ist.

5. Absperrventil (1) nach einem der Ansprüche 1 bis 4, **dadurch gekennzeichnet, dass** der Sitz (6) und der Käfig (7) abnehmbar sind.

6. Absperrventil (1) nach einem der Ansprüche 1 bis 4, **dadurch gekennzeichnet, dass** der Sitz (6) und der Käfig (7) nicht abnehmbar sind.

## Claims

1. A globe valve (1), which includes a body (2) through which a fluid circulation channel (3) passes, which delimits a fluid path (VF) with an inlet and an outlet, as well as a shutter (5) housed inside a branch (4) generally perpendicular to said body, this shutter (5) being movable between a first extreme position in which it obturates said channel (3) and a second extreme position in which it does not obdurate the channel (3), the valve having an annular seat (6), the central opening (61) of which is intended to be traversed by said fluid path (VF) **characterized by** the fact that said channel (3) has, on either side of the region of action (32) of said shutter (5), that is to say the part of the channel(3) that interferes with said branch (4), a generally circular liquid circulation section, which is connected continuously, at least in the region of action of said shutter (5), to a section that is longer than it is wide, that is to say flattened, said body (2) being devoid of any element protruding inwardly of said channel (3), and said shutter (5) having a spout-shaped, that is to say generally beveled, free end (51), and being partially engaged in the seat (6) so as to ensure the continuity of the wall of the channel (3) in the fluid circulation position .

2. The valve (1) according to claim 1, **characterized in that** said channel (3) has an upward slope in the region of action (32) of said shutter (5).

3. The valve (1) according to claim 2, **characterized in that** said channel (3) has a first inflection (11) upstream of the upward slope area and a second inflection (12) downstream of the upward slope area, the terms "upstream" and "downstream" being considered by taking into account the direction of flow of a fluid.

4. The valve (1) according to one of claims 1 to 3, **characterized in that** it includes a cage (7) for guiding said shutter (5) and holding its seat (6) and **in that** this cage (7) has an annular shape, whose wall has a circulation passage (72) of the fluid path (VP) which has a shape and an orientation similar to those of said section that is longer than it is wide, that is to say flattened.

5. The valve (1) according to one of claims 1 to 4, **characterized in that** said seat (6) and said cage (7) are removable.

6. The valve (1) according to one of claims 1 to 4, **characterized in that** said seat (6) and said cage (7) are irremovable.
